# Europäisches Patentamt

## European Patent Office

## Office européen des brevets

(11) Veröffentlichungsnummer: **0 210 978**
**B1**

(12) **EUROPÄISCHE PATENTSCHRIFT**

(45) Veröffentlichungstag der Patentschrift:
**23.11.88**

(21) Anmeldenummer: **84901331.3**

(22) Anmeldetag: **29.03.84**

(86) Internationale Anmeldenummer:
**PCT/DE 84/00071**

(87) Internationale Veröffentlichungsnummer:
**WO 85/04436 (10.10.85 Gazette 85/22)**

(51) Int. Cl.⁴: **E 02 B 3/06**

(54) **ZICK-ZACK-WELLENABWEISER.**

(43) Veröffentlichungstag der Anmeldung:
**25.02.87 Patentblatt 87/9**

(45) Bekanntmachung des Hinweises auf die Patenterteilung:
**23.11.88 Patentblatt 88/47**

(84) Benannte Vertragsstaaten:
**AT BE CH DE FR GB LI LU NL SE**

(56) Entgegenhaltungen:
**DE-A-3 235 602**
**FR-A-2 223 515**
**US-A-2 191 924**
**US-A-2 941 371**

(73) Patentinhaber: **KLÖCKNER, Albrecht, Spreitgen, D-5223 Nümbrecht (DE)**

(72) Erfinder: **KLÖCKNER, Albrecht, Spreitgen, D-5223 Nümbrecht (DE)**

(74) Vertreter: **Zipse + Habersack, Kemnatenstrasse 49, D-8000 München 19 (DE)**

LIBER, STOCKHOLM 1988

EP 0 210 978 B1

## Beschreibung

Die Erfindung betrifft einen Zick-Zack-Wellenabweiser sowohl in festgegründeter als auch in schwimmender Bauweise. Ein solcher Zick-Zack-Wellenabweiser, mit oder ohne Landanschluß, hat die Aufgabe, mit seinen im wesentlichen senkrecht zur Stillwasseroberfläche verlaufenden und im wesentlichen geraden Seitenwänden ankommende Wellen zu reflektieren und durch Interferenz der ankommenden und reflektierten Wellen die Wucht des auf den Wellenabweiser auftreffenden Seegangs zu mildern.

Zick-Zack-Wellenabweiser in festgegründeter Bauweise sind beispielsweise aus US-A-2 191 924 und 2 941 371, GB-A-636 840 sowie aus ER-A-2 223 515 bekannt.

Der Zick-Zack-Wellenabweiser nach FR-A-2 223 515 hat einen Zick-Zack-Winkel $\alpha = 60°$. Ein solcher Winkel ergibt den von Errichtern von Wasserbauwerken gefürchteten "Hundehütten-Effekt", d. h. die Wellen rennen sich im spitzen Winkel fest und führen zu enorm hohen Bauwerksbelastungen. Die für das Bauwerk angegebenen Dimensionierungsbeispiele, nämlich 1,80 m Gesamthöhe und 3,60 m Schenkellänge sind im übrigen ohne einen Bezug zu den Daten des abzuweisenden Seegangs genannt, sie sind lediglich so gewählt, um eine erhöhte Standfestigkeit des Wellenabweisers zu erzielen, und um im übrigen die Zick-Zack-Elemente handhaben zu können. Geht man jedoch davon aus, daß die Gesamthöhe dieses bekannten Zick-Zack-Wellenabweisers ca 2 mal so groß wie die Wassertiefe ist, um eine Überspülung unter Berücksichtigung der "Mc Cowan-Grenze" (siehe dazu auch Seite 5, Z. 1-15) zu verhindern, so errechnet sich hieraus eine Schenkellänge gleich 4mal der Wassertiefe.

Zick-Zack-Wellenabweiser in schwimmender Bauweise sind in GB-A-1 559 845 beschrieben. Hier stoßen die Seiten-wände bei einer Ausführungsform unter einem Winkel von 90° aufeinander. Den einzuhaltenden Größenverhältnissen wird jedoch keine Bedeutung zugemessen, so daß diesbezüglich keine Aussage gemacht wird. Die einzelnen Seitenwände des Zick-Zack-Wellenabweisers können durch Gelenkverbindungen mit horizontalen Gelenkachsen senkrecht zur Längserstreckung des Wellenabweisers zusammengeschlossen sein.

Es wurde gefunden, daß die Größenbemessungen des Zick-Zack-Wellenabweisers von ganz entscheidender Bedeutung ist, sowohl in Bezug auf seine wellenreflektierenden Eigenschaften als auch aus Festigkeitsgründen. Für die Größenbemessung ist in erster Linie der zu erwartende größte Wellenangriff (Wellenhöhe und -länge maßgebend, sodann die Wassertiefe, in der das (festgegründete) Bauwerk errichtet wird. Zick-Zack-Wellenabweiser mit kleinen Schenkellängen der Zick-Zack-Elemente wie in den genannten Schriften dargestellt verhalten sich gegenüber langwelligem, hohem Seegang im wesentlichen wie Wellenabweiser mit geradliniger Front, die bei starkem Seegang dermaßen hohen Belastunggen ausgesetzt werden, daß immer wieder mit Beschädigungen oder gar vollständiger Zerstörung gerechnet werden muß. Schwimmende Zick-Zack-Wellenabweiser starren unterliegen der Gefahr, durch den Seegang in Schwingungen zu geraten, die bei einer starren Bauweise bei starkem Seegang unweigerlich ein Zerbrechen des Wellenabweisers nach sich ziehen.

Der Erfindung liegt die Aufgabe zugrunde, einen Zick-Zack-Wellenabweiser in festgegründeter bzw. schwimmender Bauweise zu schaffen, der auch den Festigkeitsanforderungen bei maximal zu erwartendem Seegang genügt.

Diese Aufgabe wird erfindungsgemäß mit einem Zick-Zack-Wellenabweiser in festgegründeter und schwimmender Bauweise gelöst, wie er durch die Ansprüche 1 und 2 gekennzeichnet ist. Weiterbildungen der Erfindung sind in den Unteransprüchen beschrieben.

Bei festgegründeten Bauwerken hat sich erwiesen, daß die Schenkellänge 1 der Zick-Zack-Elemente und die Gesamthöhe h der wellenreflektierenden Seitenwand der Zick-Zack-Elemente maßgeblich von der Wassertiefe d (bei Stillwasser) an der Gründungsstelle abhängen. Folgende Bemessungsregeln sind maßgebend:
$1 \geqslant 5 - 8 \, d$ und zugleich
$h = 2 - 2,5 \, d$

Für schwimmende Bauwerke gelten nach der Erfindung die folgenden Bemessungsregeln:
$1 \geqslant \frac{\lambda_{max}}{2}$,
wobei $\lambda$ max die maximal zu erwartende, abzuweisende Wellenlänge ist,
und $h \geqslant H_{max}$, vorzugsweise $h \geqslant 1,5 \, H_{max}$,
wobei $H_{max}$ die maximal zu erwartende, abzuweisende Wellenhöhe ist. Dabei sollte die Freibordhöhe f etwa 1/4 der Gesamthöhe h der wellenreflektierenden Seitenwand betragen, d. h. die Seitenwand sollte in Stillwasser zu 3/4 unter und zu 1/4 über dem Wasser liegen, damit das Bauwerk im Betriebsfall nicht zu sehr überspült wird. Weiterhin sind bei schwimmenden Bauwerken die einzelnen Zick-Zack-Elemente durch schwingungsdämpfende Kupplungselemente zusammenzuschließen, damit der dem abzuweisenden Seegang überlagerte langwellige Seegangsanteil ohne übermäßige Belastungen auf das Bauwerk "abgeritten" werden kann.

Die Erfindung wird nachfolgend anhand beigefügter Zeichnungen näher erläutert. Es zeigen

Fig. 1 und 2 einen festgegründeten Zick-Zack-Wellenabweiser mit einwirkender Einzelwelle in Seitenansicht und in Draufsicht;

Fig. 3 und 4 einen schwimmenden Zick-Zack-Wellenabweiser mit einwirkendem Wellengang in Seitenansicht und in Draufsicht;

Fig. 5 und 6 eine erste Ausführungsform eines Kupplungselements zum Zusammenschließen angrenzender Zick-Zack-Elemente eines schwimmenden Zick-Zack-Wellenabweisers in Seitenansicht und in teilweise geschnittener Draufsicht;

Fig. 7 eine zweite Ausführungsform eines Kupplungselements in Draufsicht;

Fig. 8 und 9 eine dritte Ausführungsform eines Kupplungselements in Seitenansicht und in Draufsicht;

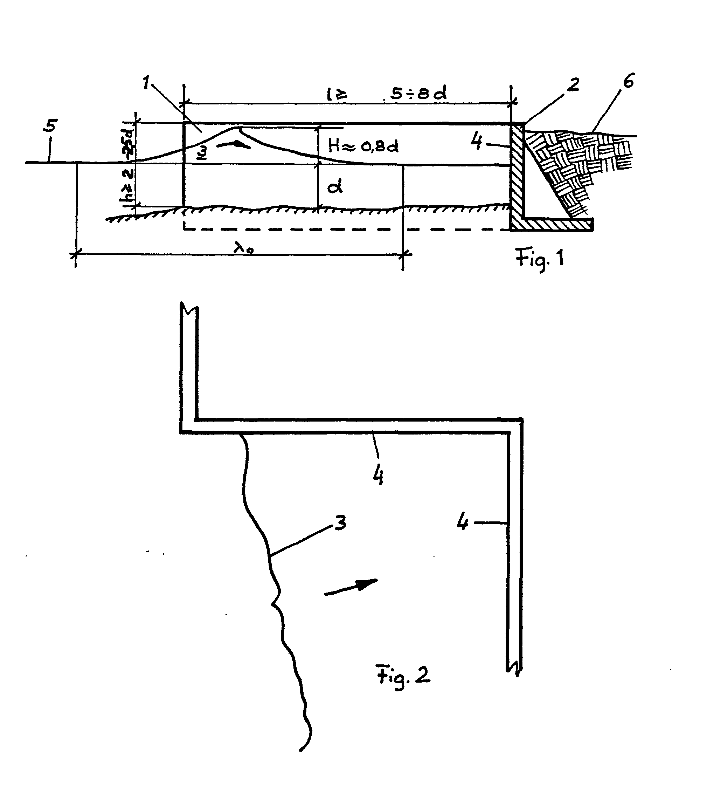

Fig. 1 eine schematische Draufsicht eines Bootshafens mit einer Hafeneinfahrt, die aus zwei schwimmenden Zick-Zack-Wellenabweisern in Faltversion und aus einem festgegründeten Zick-Zack-Wellenabweiser aufgebaut ist;

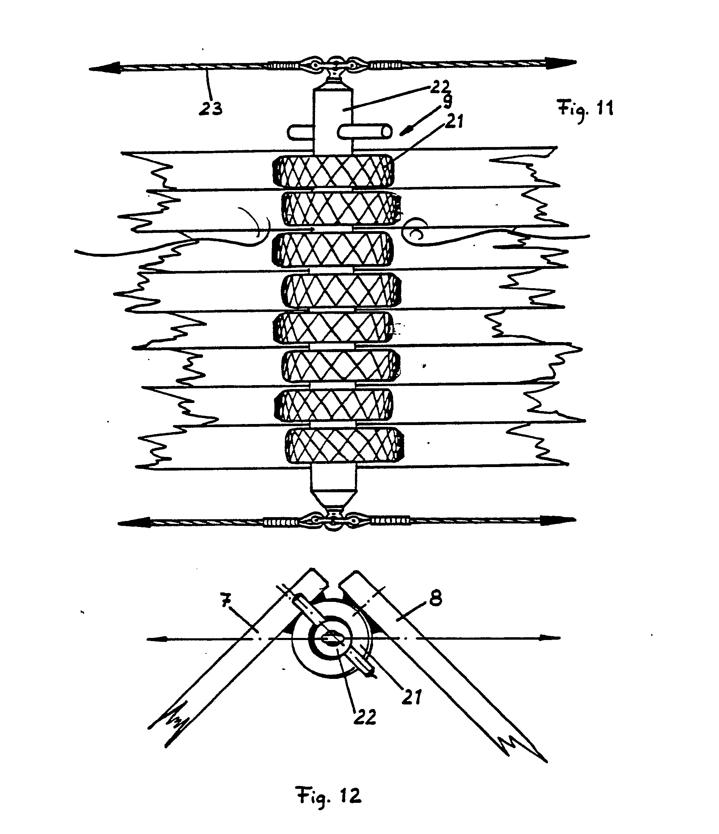

Fig. 11 und 12 eine Ausführungsform der Gelenkverbindung zweier angrenzender Zick-Zack-Elemente eines Zick-Zack-Wellenabweisers in Faltversion, in Seitenansicht und in Draufsicht; und

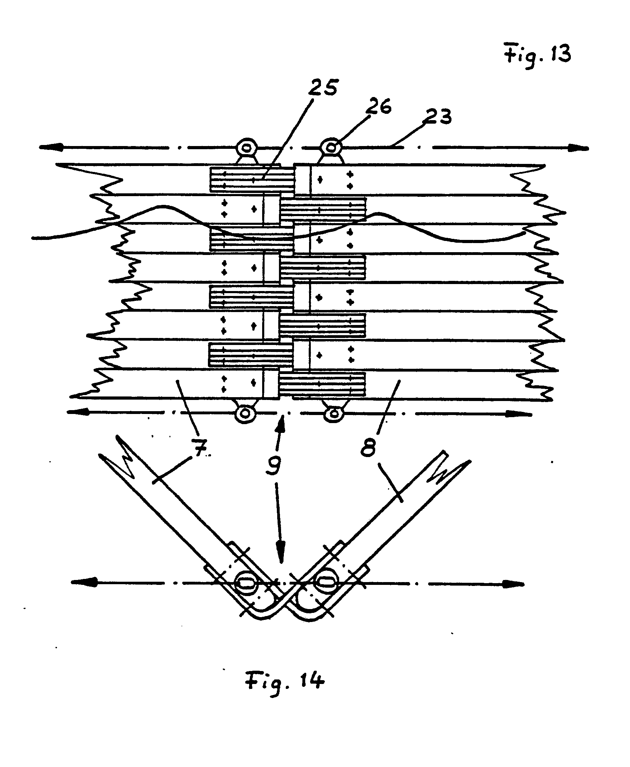

Fig. 13 und 14 eine zweite Ausführungsform einer Gelenkverbindung zweier angrenzender Zick-Zack-Elemente eines Zick-Zack-Wellenabweisers in Faltversion, Seitenansicht und in Draufsicht.

Der festgegründete-Zick-Zack-Wellenabweiser nach Fig. 1 und 2 setzt sich aus geraden, im wesentlichen rechtwinklig aneinanderstoßenden Zick-Zack-Elementen 1 und 2 zusammen, die z. B. im Querschnittsprofil L-förmige Betonfertigteile sein können, deren den Wellen 3 zugewandte Seitenwände 4 im wesentlichen senkrecht zur Stillwasseroberfläche 5 verlaufen. Die Zick-Zack-Elemente 1 und 2 werden z. B. einer Küste 6 vorgelagert und mit Steinen hinterfüllt.

Die Schenkellänge 1 der Zick-Zack-Elemente 1 und 2 ist zumindest 5 bis 8 mal so groß wie die Wassertiefe d. Die Gesamthöhe h der wellenreflektierenden Seitenwände 4 ist 2 bis 2,5 mal so groß wie die Wassertiefe d.

Begründung: unterhalb der Flachwassergrenze $d/\lambda = 0,5$ ($\lambda$ = Wellenlänge) können Wellen nicht mehr die volle Steilheit $H/\lambda \approx 1/7$ ($H$ = Wellenhöhe) einhalten, sondern sie brechen, d. h. nur flachere Wellen dieser Wellenlänge können ungebrochen weiterlaufen und das Bauwerk erreichen. Bei sehr langen Wellen, die in Flachwasser einlaufen ($d/\lambda < 0,1$) bilden sich sog. Einzelwellen, die bei

$$\frac{H}{d} = 0,78 \text{ (Mc Cowan-Grenze)}$$

Brecher bilden. In flachem Wasser kann also keine höhere Welle auftreten und somit das Bauwerk erreichen, die höher als ca 4/5 der Wassertiefe d ist. Allerdings läuft eine solche Einzelwelle, die eben noch nicht bricht, praktisch mit ihrer vollen Höhe oberhalb Stillwasserniveau, das Wellental ist sehr lang und sehr flach.

Als Bemessungskriterium wird deshalb hier die Basislänge $\lambda_0$ des Einzelwellen-Berges eingeführt, die vereinfacht, aber genügend genau mit $\lambda_0 \approx 10 H = 8 d$ festgestellt werden kann.

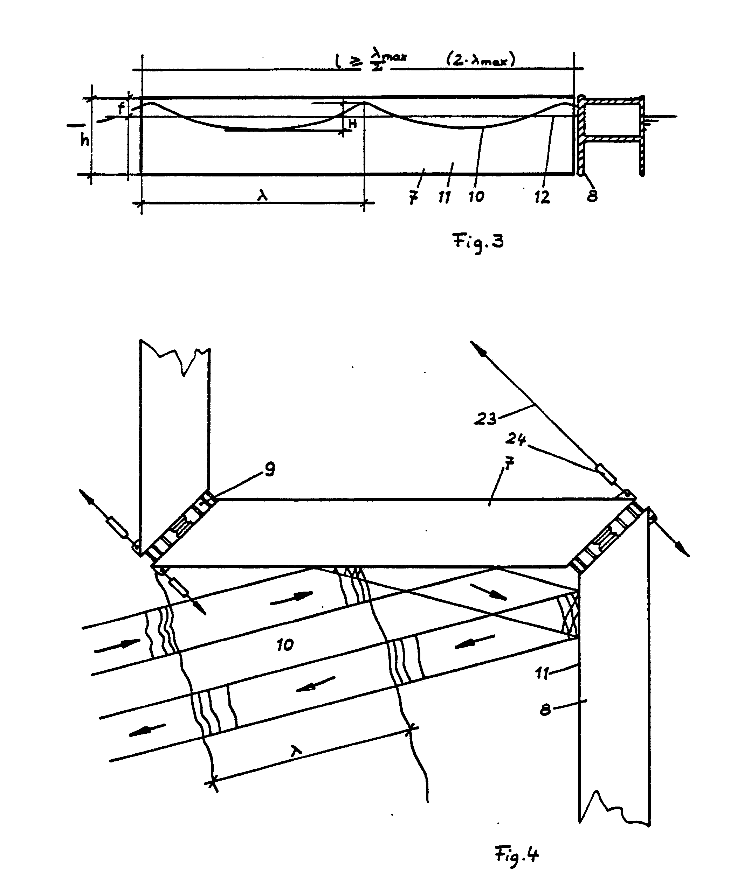

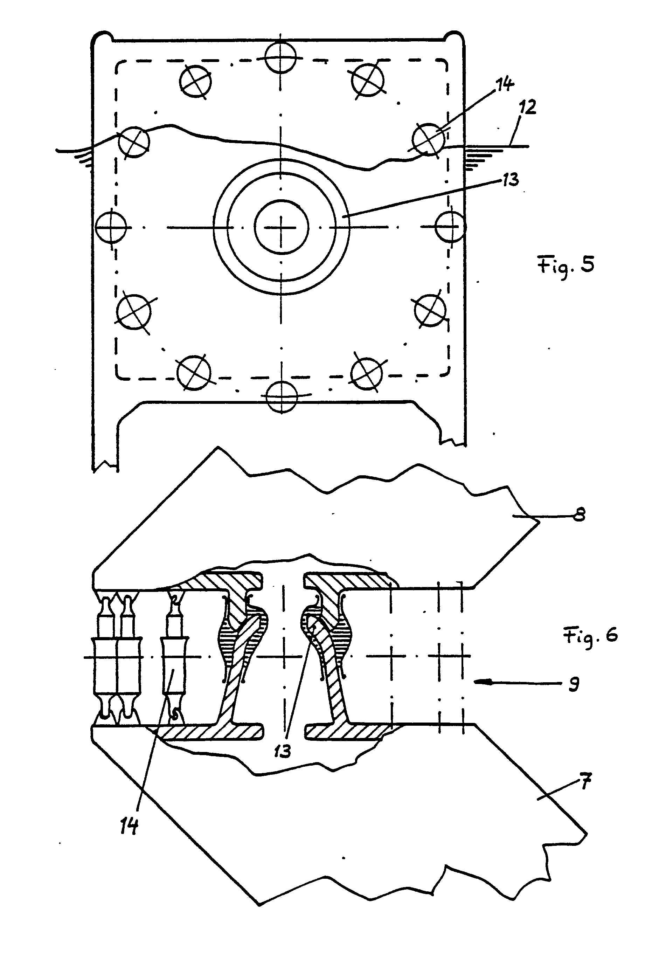

Der schwimmende Zick-Zack-Wellenabweiser nach Fig. 3 und 4 setzt sich aus Zick-Zack-Elementen 7 und 8 zusammen, die im wesentlichen rechtwinklig aneinanderstoßen und an ihren angrenzenden, um 45° angeschrägten Endflächen durch schwingungsdämpfende Kupplungselemente 9 zusammengeschlossen sind. Die den Wellen 10 zugewandten Seitenwände 11 verlaufen auch hier im wesentlichen senkrecht zur Stillwasseroberfläche 12.

Die Schenkellänge 1 der Zick-Zack-Elemente 7 und 8 ist zumindest gleich oder größer als die halbe maximal zu erwartende Wellenlänge $\lambda_{max}$. Die Gesamthöhe h der wellenreflektierenden Seitenwände 11 ist zumindest gleich oder größer als die maximal zu erwartende Wellenhöhe $H_{max}$.

Begründung: ergreift man nicht besondere schwingungsdämpfende Maßnahmen wie durch die Kupplungselemente 9, so gerät der Zick-Zack-Wellenabweiser mit kürzeren Schenkellängen bzw. in längerwelligem Seegang in Schwingung und weist er diesen langwelligen Seegangsanteil nicht mehr effektiv ab. Kürzerer Seegang wird ohne schwingungsdämpfende Maßnahmen mit Sicherheit abgewiesen bis zu

$$1 \geqslant 2 \lambda.$$

Der experimentell und theoretisch festgestellte Zusammenhang zwischen $\lambda$ und H ist im Wasser genügender Tiefe:

$(H/\lambda)_{max} = 0,14 \approx 1/7$ (Michell-Havelock-Grenze),

steilerer Seegang kann nicht auftreten, es bilden sich dann die sog. Brecher.

Die Bemessungsgrenze $h \geqslant H_{max}$ ergibt erfahrungsgemäß noch ausreichenden Schutzeffekt. Ein befriedigenderer Schutzeffekt ist ab

$h \geqslant 1,5 H_{max}$

zu beobachten. Dabei sollte die Freibordhöhe $f \approx 1/4 h$ sein, d. h. die Seitenwand 11 sollte in Stillwasser zu 3/4 unter und zu 1/4 über Wasser liegen, damit das Bauwerk im Betriebsfall nicht zu sehr überspült wird.

Mit so bemessenen Bauwerken erreicht man die vorteilhafte gegengleiche Reflektion.

An einem mit gegebener Schenkellänge 1 installierten schwimmenden Zick-Zack-Wellenabweiser ist es nicht zu verhindern, daß das Bauwerk auch längerem Seegang gelegentlich ausgesetzt wird, als es der Betriebsituation entspricht. Den langwelligen Anteil des Seegangs kann das Bauwerk nicht reflektieren, es muß ihn aber "abreiten" können. Dazu verhelfen die schwingungsdämpfenden Kupplungselemente 9. Im Betriebsbereich halten sie die Zick-Zack-Elemente 7 und 8 genügend bewegungsarm und rechtwinklig zueinander, im Notfall bieten sie aber genügende Bewegungsfreiheit, dämpfen aber die Relativbewegung der Elemente soweit, daß auch im Resonanzfall kein übermäßiges Aufschaukeln erfolgen kann.

Die Kupplungselemente 9 können diese Funktionen erfüllen, wenn sie wie das Kupplungselement nach Fig. 5 und 6 genügend schub-, zug- und drucksteif sind, aber eine gedämpfte Torsions- und Biegebewegung zulassen. Das Kupplungselement nach Fig. 5 und 6 umfaßt hierzu ein im wesentlichen schub-, zug- und drucksteifes Kugelgelenk 13, das schmiermitteldicht eingekapselt ist. Das Kugelgelenk 13 ist in einen Kranz von zwischen den Zick-Zack-Elementen 7 und 8 angreifenden Zugfeder-Stoßdämpfern 14 bzw. Zugfeder-Energiegewinnungszylindern eingebettet.

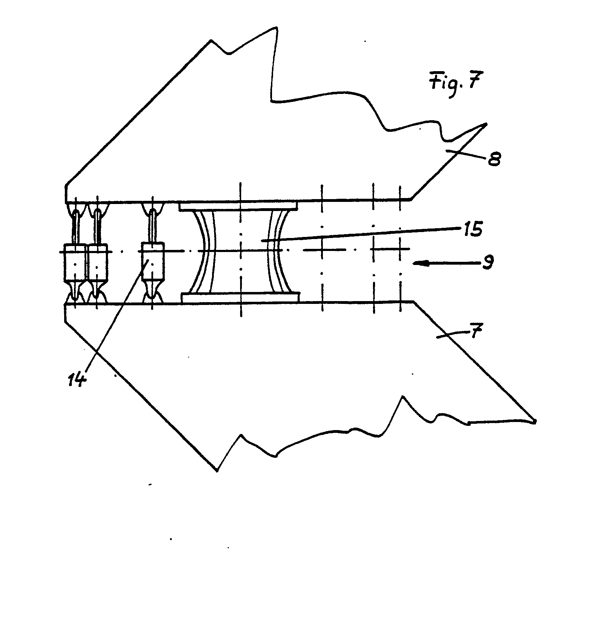

Fig. 7 zeigt eine zweite Ausführungsform eines Kupplungselements 9. Dieses Kupplungselement 9 umfaßt einen im wesentlichen schub-, zug- und drucksteifen Elastikblock 15, der wie das Kugelgelenk 13 bei der Ausführungsform nach Fig. 5 und 6 in einen Kranz von zwischen den Zick-Zack-Elementen 7 und 8 angreifenden Stoßdämpfern 14 bzw. Energiegewinnungszylindern eingebettet ist.

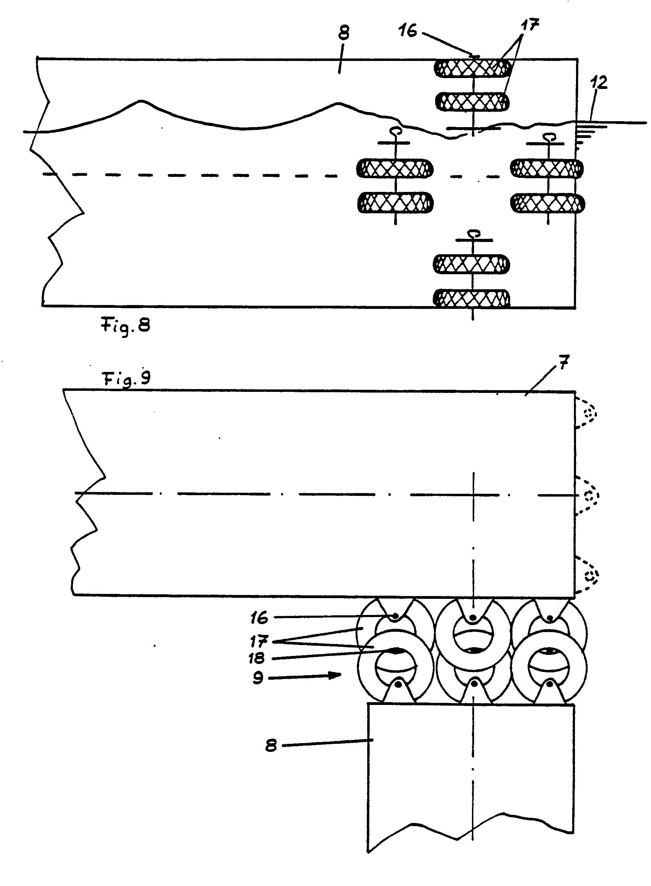

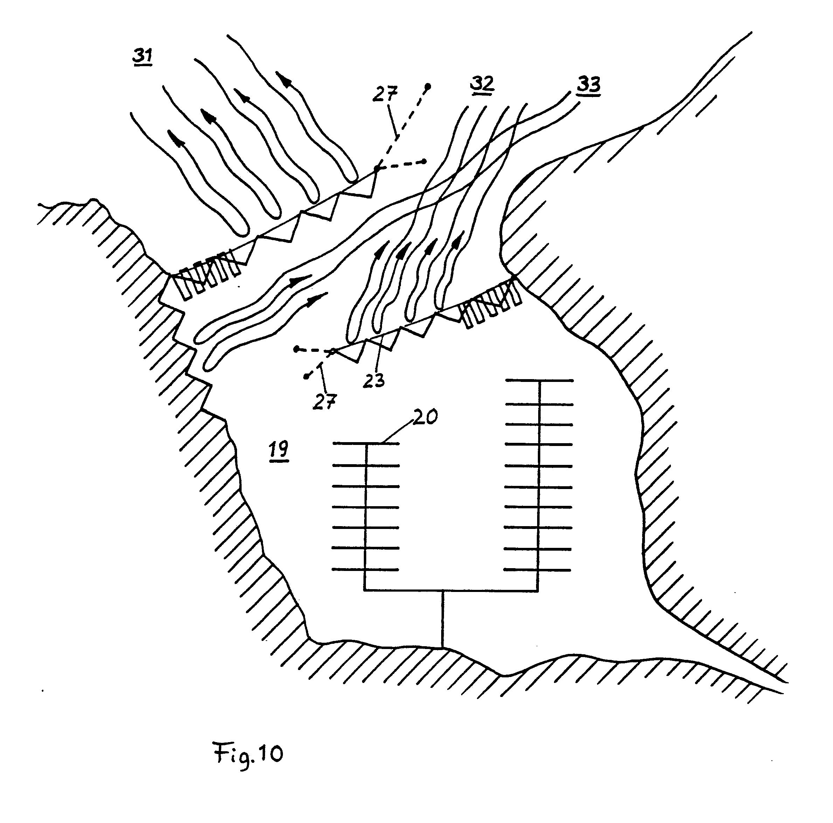

Eine dritte, weniger aufwendige Ausführungsform eines Kupplungselements 9 zeigen Fig. 8 und 9. Dieses Kupplungselement 9 eignet sich insbesondere dort, wo der Zick-Zack-Wellenabweiser gleichzeitig als Bootssteg Verwendung findet. An die angrenzenden Endflächen der Zick-Zack-Elemente 7 und 8, die hier stumpf aneinanderstoßen, sind mittels Bolzen 16 Altreifen 17 angelenkt. Im dargestellten Fall sind dies an beiden Endflächen je vier Gruppen von jeweils zwei im Abstand übereinander ausgefluchteten Altreifen. Die Altreifen 17 des einen Zick-Zack-Elements 7 überlappen sich mit denjenigen des anderen Zick-Zack-Elements 8, und im Überlappungsbereich sind sie durch Bolzen 18 zusammengeschlossen. Ein solches Kupplungselement 9 ist zwar von einfacher Bauweise, es hat jedoch nicht die erwünschte Schub-, Zug- und Drucksteifigkeit, so daß es insbesondere dort zum Einsatz kommen wird, wo nur geringerer Wellengang zu erwarten ist, wie beispielsweise in kleineren Binnenseen.

Zusätzlich zur Schwingungsdämpfung durch die Kupplungselemente 9 kann man an den Zick-Zack-Elementen 7 und 8 weitere (nicht dargestellte) Dämpfungsglieder gegen Tauch- und Stampfschwingungen in langem Seegang installieren, wie z. B.

- Dämpfungskammern, unten offen, durch Zwischenwände unterteilt, mit regelbaren Luftventilen,
- Trimmtanks mit Pumpen,
- Trimmflossen, die auf die Orbitalbewegung des Seegangs ansprechen,
- Verschiebegewichtsblöcke, usw..

Zick-Zack-Wellenabweiser in schwimmender Bauweise können, wenn die Zick-Zack-Elemente 7 und 8 in der Draufsicht entsprechend schmal sind, in sog. Faltversion gemäß Fig. 10 bis 14 ausgeführt werden. Es bieten sich folgende Vorteile:

1. ungewöhnliches Kosten-Nutzen-Verhältnis, d. h. effektiver Schutz bei extrem niedrigem Bauaufwand,
2. bei Schönwetter auf engem Raum wegfaltbar für freies Fahrwasser,
3. nachträglich installierbar ohne irgendwelche Änderungen an der Bootssteganlage.

Bei einem Zick-Zack-Wellenabweiser in Faltversion sind die Kupplungselemente 9 natürlich so auszubilden, daß sie ein Zusammenfalten und Auseinanderfalten der Zick-Zack-Elemente 7 und 8 zulassen. In Fig. 10 ist der Bootshafen 19 mit der Bootssteganlage 20 durch zwei zueinander versetzte Zick-Zack-Wellenabweiser in Faltversion von der offenen See abgetrennt. In Zusammenwirken mit einem dritten, festgegründeten Zick-Zack-Wellenabweiser können, wie durch die Wellenzüge 31, 32 und 33 dargestellt, keine Wellen durch die Hafeneinfahrt ins Innere des Bootshafens 19 gelangen.

Eine erste Ausführungsform eines Kupplungselements 9 für einen Zick-Zack-Wellenabweiser in Faltversion ist in Fig. 11 und 12 dargestellt. Dieses Kupplungselement 9 umfaßt Altreifen 21, die in Ausfluchtung zueinander abwechselnd an dem einen und an dem anderen Ende angrenzender Zick-Zack-Elemente 7 und 8 befestigt sind. Ein Bolzen 22 ist als Gelenkachse durch die Altreifen 21 gesteckt. Spanntrossen 23 greifen an den oberen und unteren Enden dieser Gelenkbolzen 22 an. Ebensolche Spanntrossen 23 sind auch bei den zuvor beschriebenen Ausführungsformen eines schwimmenden Zick-Zack-Wellenabweisers vorgesehen, um das Bauwerk zu versteifen. Vorteilhaft sind Stoßdämpferelemente 24 in die Spanntrossen eingeschaltet.

Eine zweite Ausführungsform eines Kupplungselements 9 für einen Zick-Zack-Wellenabweiser in Faltversion ist in Fig. 13 und 14 gezeigt. Dieses Kupplungselement 9 umfaßt Gummigewebebänder 25 oder dgl., die zur Bildung einer Scharnierverzahnung wechselweise an das innenseitige bzw. außenseitige Ende angrenzender Zick-Zack-Elemente 7 und 8 befestigt sind. Auch hier sind wiederum Spanntrossen 23 vorgesehen, die an Bolzenaugen 26 an den Ober- und Unterseiten der Enden der Zick-Zack-Elemente anschließen.

Spanntrossen 23 zur Versteifung des Zick-Zack-Wellenabweisers können, wie in Fig. 4 dargestellt, auf der Innen- und der Außenseite gespannt sein. In manchen Fällen, wo mit geringeren Belastungen zu rechnen ist, können gemäß Fig. 10 Spanntrossen 23 auch nur auf der Außen- oder Wetterseite gespannt sein. Der schwimmende Zick-Zack-Wellenabweiser ist, wie in Fig. 10 bei 27 dargestellt, noch in geeigneter Weise gegen Abtriften z. B. am Grund zu verankern.

Anzumerken ist noch, daß bei der Faltversion wegen der Vertikalbiegesteifigkeit und der Torsionssteifigkeit der Faltgelenke die Zick-Zack-Elemente selbst entsprechend torsionsweich sein müssen und in der Praxis auch sind, damit Notsituationen ohne Schäden vom Wellenabweiser überstanden werden.

**Patentansprüche**

1. Zick-Zack-Wellenabweiser, dessen festgegründete, den Wellen (3) zugewandte, im wesentlichen gerade Seitenwände (4) im wesentlichen senkrecht zur Stillwasseroberfläche (5) verlaufen, wobei
- die Seitenwände (4) rechtwinklig aneinanderstoßend angeordnet sind,
- die Schenkellänge (1) der Seitenwände (4) 5 bis 8mal so groß oder größer als die Wassertiefe (d) ist und
- die Gesamthöhe (h) der wellenreflektierenden Seitenwände (4) 2 bis 2,5mal so groß wie die Wassertiefe (d) ist.

2. Zick-Zack-Wellenabweiser, dessen schwimmende, den Wellen (10, 31, 32) zugewandte, im wesentlichen gerade Seitenwände (11) im wesentlichen senkrecht zur Stillwasseroberfläche (12) verlaufen, wobei
- die Seitenwände (11) rechtwinklig aneinanderstoßend angeordnet sind, dadurch gekennzeichnet, daß
- die Schenkellänge (1) der Seitenwände (11) zumindest gleich oder großer als die halbe maximal zu erwartende Wellenlänge ($\lambda_{max}$) ist und
- die Gesamthöhe (h) der wellenreflektierenden Seitenwände (11) zumindest gleich oder größer als das 1 bis 1,5fache der maximal zu erwartenden Wellenhöhe ($H_{max}$) ist, wobei die Freibordhöhe (f) der Seitenwände (11) vorzugsweise etwa 1/4 der Gesamthöhe (h) beträgt,
- und daß die Zick-Zack-Elemente (7, 8) durch schwingungsdämpfende Kupplungselemente (9) zusammengeschlossen sind.

3. Zick-Zack-Wellenabweiser nach Anspruch 2, dadurch gekennzeichnet, daß die Kupplungselemente (9) ein im wesentlichen schub-, zug- und drucksteifes Kugelgelenk (13) umfassen, eingebettet in einen Kranz von zwischen den Zick-Zack-Elementen (7, 8) angreifenden Stoßdämpfern (14) bzw. an sich bekannten Energiegewinnungszylindern.

4. Zick-Zack-Wellenabweiser nach Anspruch 2, dadurch gekennzeichnet, daß die Kupplungselemente (9) einen im wesentlichen schub-, zug- und drucksteifen Elastikblock (15) umfassen, eingebettet in einen Kranz von zwischen den Zick-Zack-Elementen angreifenden Stoßdämpfern (14) bzw. an sich bekannten Energiegewinnungszylindern.

5. Zick-Zack-Wellenabweiser nach Anspruch 2, durch gekennzeichnet, daß die Kupplungselmente (9) an den angrenzenden Seiten der Zick-Zack-elemente (7, 8) mittels Bolzen (15) angelenkte, einander überlappende Altreifen (17) aufweisen, die ihrerseits durch Bolzen (18) zusammengeschlossen sind.

6. Zick-Zack-Wellenabweiser nach einem der Ansprühe 1 bis 5, dadurch gekennzeichnet, daß die Oberseite der Zick-Zack-Elemente (7, 8) begehbar als Bootssteg ausgebildet ist.

7. Zick-Zack-Wellenabweiser nach einem der Ansprüche 2 bis 5, dadurch gekennzeichnet, daß die Zick-Zack-Elemente (7, 8) in der Draufsicht schmal sind und die Kupplungselemente (9) ein Zusammenfalten und Auseinanderfalten der Zick-Zack-Elemente zulassen.

8. Zick-Zack-Wellenabweiser nach einem der Ansprüche 2 bis 5, dadurch gekennzeichnet, daß die Zick-Zack-Elemente (7, 8) durch von Ecke zu Ecke gespannte Spanntrossen (23) mit Stoßdämpfern (24) versteift sind.

9. Zick-Zack-Wellenabweiser nach Anspruch 7 und 8, dadurch gekennzeichnet, daß die Kupplungselemente (9) Altreifen (21) umfassen, die in Ausfluchtung zueinander abwechselnd an dem einen und an dem anderen Ende angrenzender Zick-Zack-Elemente (7, 8) befestigt sind, wobei ein Bolzen (22) als Gelenkachse durch die Altreifen (21) gesteckt ist, und daß Spanntrossen (23) an den oberen und unteren Enden dieser Gelenkbolzen (22) angreifen.

10. Zick-Zack-Element nach Anspruch 7 und 8, dadurch gekennzeichnet, daß die Kupplungselemente (9) Gummigewebebänder (25) oder dgl. umfassen, die zur Bildung einer Scharnierverzahnung wechselweise an das innenseitige bzw. außenseitige Ende angrenzender Zick-Zack-Elemente (7, 8) befestigt sind.

**Claims**

1. Zigzag breakwater with its essentially straightline side walls (4) facing the attacking waves (3) and embedded into the sea bottom essentially forming right angles to the calm water surface (5), wherein
- said side walls (4) form right angles with each other,
- the length (1) of said side walls (4) is 5 to 8 times as great or greater than the depth of water (d), and
- the total height (h) of said wave-reflecting side walls (4) is 2 to 2.5 times as great as the depth of water (d).

2. Zigzag breakwater with its essentially straight-line floating side walls (11) facing the attacking waves (10, 31, 32) essentially forming right angles to the calm water surface (12), wherein said side walls (11) form right angles with each other, characterized in that
- the length (1) of said side walls (11) is at least equal to or greater than half of the maximum foreseeable wave length ($\lambda_{max}$), and
- the total height (h) of said wave-reflecting side walls (11) is at least equal to or greater than 1 to 1.5 times the maximum foreseeable wave height ($H_{max}$), with the freeboard height (f) of the side walls (11) preferably measuring approximately 1/4 of the total height (h),
- and with the zigzag elements (7, 8) being interconnected by means of oscillation-damping connecting members (9).

3. Zigzag breakwater according to claim 2, characterized in that the connecting members (9) consist of an essentially shear-, tug-, and thrust-transmitting spherical joint (13) which is surrounded by a ring of shock absorbers (14) or known energy-producing cylinders which connect the zigzag elements (7, 8) to each other.

4. Zigzag breakwater according to claim 2, characterized by the fact that the connecting members (9) consist of essentially shear-, tug-, and thrust transmitting flexible connector (15) which is surrounded by a ring of shock absorbers (14) or known energy-producing cylinders which connect the zigzag elements to each other.

5. Zigzag breakwater according to claim 2, characterized by the fact that along the adjoining end surfaces of the zigzag elements (7, 8), the connecting members (9) exhibit overlapping scrap tires (17) joined to the connecting members by means of bolts (16), with the scrap tires in turn being connected to each other by means of bolts (18).

6. Zigzag breakwater according to one of claims 1 to 5, characterized by the fact that the upper surface of the zigzag elements (7, 8) can be walked on and can serve as a pier.

7. Zigzag breakwater according to one of claims 2 to 5, characterized by the fact that the zigzag elements (7, 8) are thin when viewed from the top and that the connecting members (9) permit the zigzag elements to be folded and unfolded.

8. Zigzag breakwater according to one of claims 2 to 5, characterized by the fact that the zigzag elements (7, 8) are reinforced by guy ropes (23) with shock absorbers (24), which extend from one corner to the next.

9. Zigzag breakwater according to claim 7 and 8, characterized by the fact that the connecting members (9) include scrap tires (21) which are in alignment with each other and which are alternately attached to one and the other end of a joining zigzag elements (7, 8), with a bolt (22) that serves as a pivot being pushed through the scrap tires (21) and with guy ropes (23) being attached to the upper and lower ends of these hinge bolts (22).

10. Zigzag element according to claims 7 and 8, characterized by the fact that the connecting members (9) consist of rubberized fabric bands (25) or similar devices which are alternately connected to the inside and outside end of adjoining zigzag elements (7, 8) to form a multiple strap hinge.

## Revendications

1. Brise-lames en zigzag dont les parois latérales (4) à fondations rigides, tournées vers les vagues (3) et sensiblement rectilignes, s'étendent pour l'essentiel perpendiculairement à la surface (5) des eaux au repos, dans lequel
- les parois latérales (4) sont disposées avec rencontre mutuelle à angle droit,
- la longueur (1) des branches des parois latérales (4) est de 5 à 8 fois égale ou supérieure à la profondeur (d) des eaux et
- la hauteur totale (h) des parois latérales (4) renvoyant les vagues est de 2 à 2,5 fois égale à la profondeur (d) des eaux.

2. Brise-lames en zigzag dont les parois latérales (11) flottantes, tournées vers les vagues (10, 31, 32) et sensiblement rectilignes, s'étendent pour l'essentiel perpendiculairement à la surface (12) des eaux au repos, dans lequel
les parois latérales (11) sont disposées avec rencontre mutuelle à angle droit, caractérisé par le fait que
- la longueur (1) des branches des parois latérales (11) est au moins égale ou supérieure à la moitié de la longueur maximale escomptée ($\lambda_{max}$) des vagues et
- la hauteur totale (h) des parois latérales (11) renvoyant les vagues est au moins égale ou supérieure à de 1 à 1,5 fois la hauteur maximale escomptée ($H_{max}$) des vagues, la hauteur de franc-bord (f) des parois latérales (11) représentant, de préférence, environ 1/4 de la hauteur totale (h);
- et que les éléments (7, 8) en zigzag sont solidarisés par l'intermédiaire d'éléments d'accouplement (9) atténuateurs de vibrations.

3. Brise-lames en zigzag selon la revendication 2, caractérisé par le fait que les éléments d'accouplement (9) englobent une articulation sphérique (13) substantiellement rigide à la poussée, à la traction et à la pression, noyée dans une couronne d'amortisseurs de chocs (14), respectivement de vérins récupérateurs d'énergie connus par eux-mêmes, en prise entre les éléments (7, 8) en zigzag.

4. Brise-lames en zigzag selon la revendication 2, caractérisé par le fait que les éléments d'accouplement (9) englobent un bloc élastique (15) substantiellement rigide à la poussée, à la traction et à la pression, noyé dans une couronne d'amortisseurs de chocs (14), respectivement de vérins récupérateurs d'énergie connus par eux-mêmes, en prise entre les éléments en zigzag.

5. Brise-lames en zigzag selon la revendication 2, caractérisé par le fait que les éléments d'accouplement (9) présentent des pneumatiques usagés (17) qui se chevauchent mutuellement, sont articulés au moyen de chevilles (16) sur les côtés contigus des éléments (7, 8) en zigzag, et sont à leur tour solidarisés par des chevilles (18).

6. Brise-lames en zigzag selon l'une des revendications 1 à 5, caractérisé par le fait que la face supérieure des éléments (7, 8) en zigzag est réalisée praticable en tant que passerelle d'appontement.

7. Brise-lames en zigzag selon l'une des revendications 2 à 5, caractérisé par le fait que les éléments (7, 8) en zigzag sont étroits observés en plan, et les éléments d'accouplement (9) permettent à ces éléments en zigzag de se replier et de se déplier en accordéon.

8. Brise-lames en zigzag selon l'une des revendications 2 à 5, caractérisé par le fait que les éléments (7, 8) en zigzag sont rigidifiés par l'intermédiare de filins tendeurs (23) bandés de coin à coin, avec des amortisseurs de chocs (24).

9. Brise-lames en zigzag selon les revendications 7 et 8, caractérisé pa le fait que les éléments d'accouplement (9) englobent des pneumatiques usagés (21) fixés en alternance, dans l'alignement les uns des autres, à l'une et à l'autre des extrémités d'éléments adjacents (7, 8) en zigzag, une cheville (22) faisant office d'axe d'articulation étant emboîtée à travers les pneumatiques usagés (21); et par le fait que des filins tendeurs (23) sont en prise avec les extrémités supérieures et inférieures de ces chevilles d'articulation (22).

10. Elément en zigzag selon les revendications 7 et 8, caractérisé par le fait que les éléments d'accouplement (9) englobent des bandes (25) en tressage de caoutchouc ou pièces similaires qui, en vue de constituer une endenture formant charnière, sont alternativement fixées à l'extrémité respectivement située à la face interne ou à la face externe d'éléments adjacents (7, 8) en zigzag.

Fig. 1

Fig. 2

Fig. 3

Fig. 4

3

Fig. 5

Fig. 6

0 210 978

Fig. 7

7

Fig. 8

Fig. 9

Fig.10

Fig. 11

Fig. 12

Fig. 13

Fig. 14